Europäisches Patentamt

European Patent Office

Office européen des brevets

(11) Publication number: **0 274 089**
A1

# EUROPEAN PATENT APPLICATION

(21) Application number: 87118504.7

(22) Date of filing: 14.12.87

(51) Int. Cl.⁴: **F16H 1/36**

(30) Priority: 08.01.87 IT 1902587

(43) Date of publication of application:
13.07.88 Bulletin 88/28

(84) Designated Contracting States:
DE FR GB

(71) Applicant: COMER S.p.A.
Viale Majno 31
I-20122 Milan(IT)

(72) Inventor: Fabbri, Fabrizio
Via Zurlini 47
I-41100 Modena(IT)

(74) Representative: Modiano, Guido et al
MODIANO, JOSIF, PISANTY & STAUB
Modiano & Associati Via Meravigli, 16
I-20123 Milan(IT)

(54) **Gear speed variator of simplified construction.**

(57) The gear speed variator has a solar gear
(15,15') which can be coupled to a first shaft, or fast
shaft, (16), and is engaged with at least one planet
gear (20,20') with a single set of teeth (30) simulta-
neously engaging a fixed crown gear (31,31'), asso-
ciated with the casing (12,13,14) of the variator, and
a movable crown gear (32,32'), associated with a
second shaft, or slow shaft (35), and having a number of teeth which differs from the number of teeth
of said fixed crown gear (31,31'). The fixed (31,31')
and movable (32, 32') crown gears are coaxial with
respect to said solar gear (15,15').

Fig. 2

## GEAR SPEED VARIATOR OF SIMPLIFIED CONSTRUCTION

The present invention relates to a gear speed variator of simplified construction.

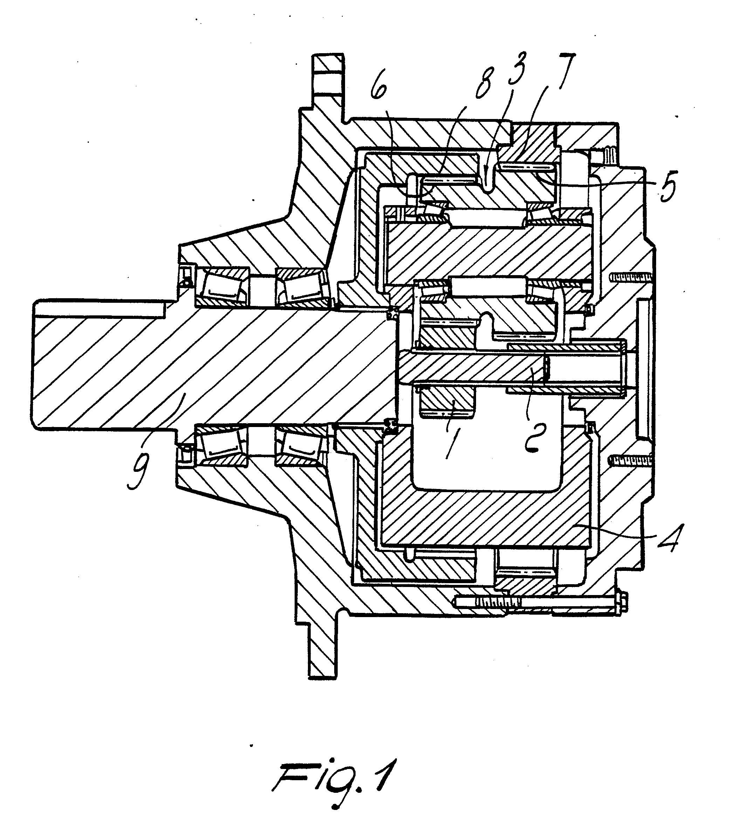

As is known, speed multiplier or reducer planetary gearing assemblies are already currently available on the market; among these speed variators, a particular type is the one illustrated in the accompanying figure 1, wherein a solar gear 1 is connected to a first shaft, or fast shaft, indicated by 2.

The solar gear 1 is coupled to one or more planet gears, generally indicated by the reference numeral 3, which are rotatably supported by a planet carrier 4 coaxial to the fast shaft 2.

In this specific known embodiment, each planet gear has two different sets of teeth 5 and 6, having different numbers of teeth, which in turn respectively engage with a fixed crown gear 7 and with a movable crown gear 8 which is associated with a second shaft or output shaft 9.

The crown gears 7 and 8 have different number of teeth with respect to one another and furthermore have different pitch diameters so as to engage with the two separate sets of teeth 5 and 6 of the planet gears 3, which are also provided with different pitch diameters.

With this embodiment it is possible to achieve high transmission ratios, which may vary from 1 to 15 up to 1 to 300 in a single stage.

In this known variator, which is undoubtedly valid from a conceptual point of view, considerable constructive difficulties are encountered for the proper operation of the variator, since the operating precision is a direct function of the perfect geometry of the planet carrier 4.

Another problem which occurs in the constructive phase resides in the fact that the two sets of teeth 5 and 6 of the planet gears 3 must be perfectly in step with one another, since step errors of even a few hundredths of a millimeter force the planet gears not to work entirely all together, since the contacts of their sets of teeth with the respective sets of teeth of the crown gears 7 and 8 with which they engage are moved apart, reducing considerably the variator's performance.

From a constructive point of view, considerably difficulties furthermore occur in making planet gears, having two different sets of teeth with different pitch diameters and with a perfect step adjustment between the two sets of teeth.

From the above it is apparent that the planetary gearing variators of the type described above, though undoubtedly valid from a theoretical point of view, in their manufacturing meet a great number of constructive problems which, besides considerably increasing their costs, drastically reduce their performance.

The aim proposed by the present invention is to eliminate the disadvantages described above by providing a gear speed variator in which the planet gears are not subject to the problem of the precise phasing between the set of teeth engaging with the fixed crown gear and the set of teeth engaging with the movable crown gear.

Within the scope of the above described aim, a particular object of the invention is to provide a speed variator, usable both as a speed reducer and multiplier, which drastically simplifies all the steps related to the construction of the planet gears, still providing a very high performance.

Still another object of the present invention is to provide a speed variator which, in one of its embodiments, offers the possibility of eliminating the conventional planet gear carrier, thus further simplifying all the constructive steps.

Not least object of the present invention is to provide a speed variator which, by virtue of its peculiar constructive characteristics, is capable of giving the greatest assurances of reliability and safety in use.

The aim described above, as well as the objects mentioned and others which will become apparent hereinafter, are achieved by a gear speed variator of simplified construction, characterized in that it comprises a casing having a solar gear which can be coupled to a first shaft, or fast shaft, and is engaged with at least one planet gear with a single set of teeth simultaneously engaging a fixed crown gear, associated with said casing of said variator, and a movable crown gear, associated with a second shaft, or slow shaft, and having a number of teeth which differs from the number of teeth of said fixed crown gear, said fixed and movable crown gears being coaxial with respect to said solar gear.

Further characteristics and advantages will become apparent from the description of two preferred, but not exclusive, embodiments, illustrated only by way of non-limitative example in the accompanying drawings, wherein:

figure 1 is a cross section view of a known embodiment of a speed variator;

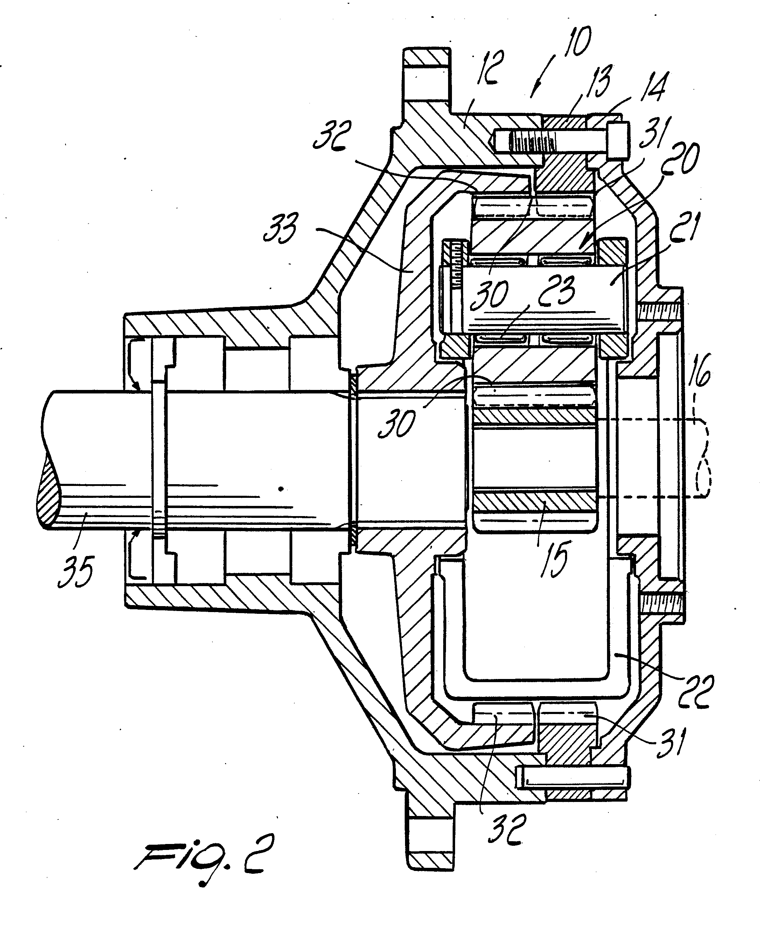

figure 2 is a cross section view of a speed variator according to the invention, having a planet carrier;

figure 3 is a view of a speed variator, according to another aspect of the invention, without a planet carrier.

With reference to the above described figures, the gear speed variator of simplified construction, according to the invention, generally indicated by the reference numeral 10, comprises a casing composed of a body 12, to which an intermediate ring 13 is connected by means of a cover 14.

A solar gear 15 is supported inside the casing and is keyed to a first shaft or fast shaft 16, which, during the operation of the variator as a speed reducer, can be actuated by per se known systems, such as an electric motor, a hydraulic motor, pneumatic means or any other actuation element.

The solar gear 15 engages with planet gears 20 which are distributed uniformly and circumferentially around the solar gear 15 and are rotatable about pivots 21 supported by a planet carrier, generally indicated by the reference numeral 22, which is rotatable coaxially with respect to the fast shaft 16.

The planet gears 20, which are connected to the pivots 21 by means of the interposition of ordinary bearings 23, have the important characteristic of having a single set of teeth 30 with an increased axial extension, which engages simultaneously with a fixed crown gear 31, defined on the inner surface of the ring 13, and with a movable crown gear 32 defined on a cup-like body 33 keyed to a second shaft, or slow shaft, 35.

The crown gears 31 and 32 have respectively different numbers of teeth, so as to obtain a variation of the number of revolutions between the shaft 16 and the shaft 35.

The crown gears 31 and 32 have an axial extension which is substantially proximate to half of the axial extension of the only set of teeth of the planet gears 30.

Furthermore, the crown gears 31 and 32 have the same axial spacing with respect to the planetary gear, and the engagement conditions are kept optimum by means of a correction of the shaping of the sets of teeth, this correction deriving from an ordinary mechanical structure calculation.

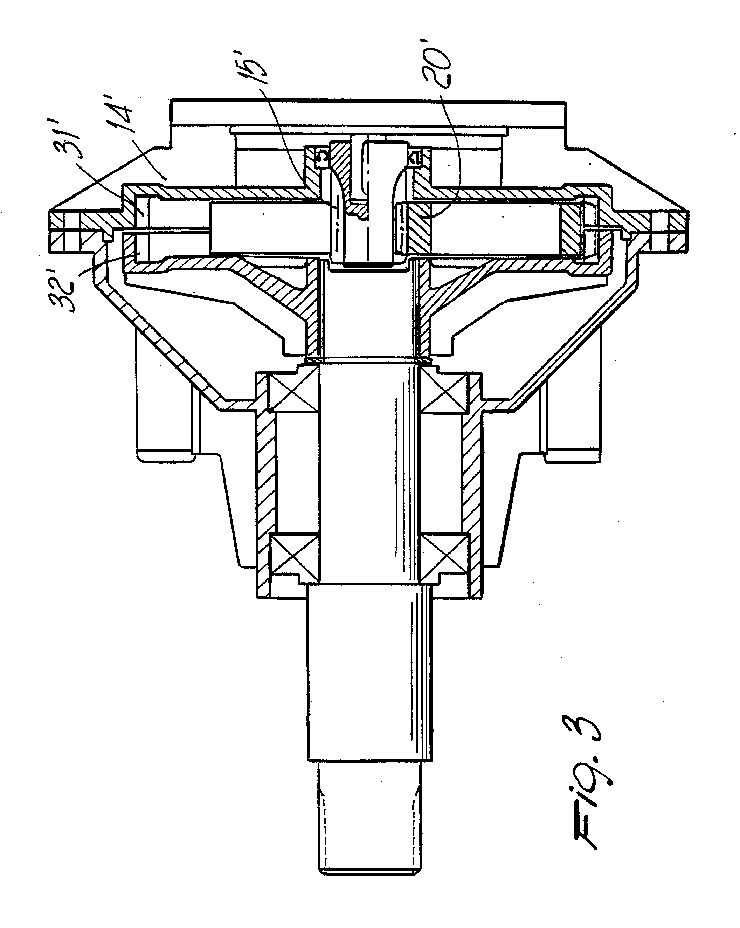

Figure 3 shows a speed variator according to a different aspect of the invention conceptually related to the above described one, with the different that the planet gears, now indicated by 20', are now floating, that is to say, they are not supported by a planet carrier and in practice seek their own optimum position of contact between the solar gear 15' and the fixed crown gear 31', directly defined on the cover 14', and the movable crown gear 32'.

The function of the planet carrier is to counterbalance the centripetal stresses of the components towards the center of the assembly due to the angle of pressure in the engagement with the outer crowns.

Another task of the planet carrier was determined by the fact that the planet gear, under the tangential thrust of the two crowns, which has the opposite sign, places itself transversely, rotating about an axis perpendicular to the axis of said planet gear.

This possibility is eliminated in the specific case since the solar gear 15' has a tooth axial length which can be equal or possibly greater than the axial extension of the planet gears; this is made possible by the fact that the planet gear has a single set of teeth.

Due to the centripetal stresses, the floating planet gears are powerfully pushed with their set of teeth against the set of teeth of the solar gear 15', which reacts with forces which are opposite to those which tend to make the planet gear rotate about an axis perpendicular to the axis if the planet gear, and therefore prevents it from rotating keeping it in a correct position.

The sum of the thrusts which the solar gear receives from the planet gears, which can be two, three or possibly more, is physically cancelled in space, leaving as only result internal stresses which are cancelled within the structure of the solar gear, which will only require the traction stress, that it to say the torque which is required to move the assembly and originates outside when used as a reducer, or will release in output a torque if the variator assembly is used as a multiplier.

From what has been described, it is thus apparent that the invention achieves the intended aims and in particular the fact is stressed that the provision of a planet gear with a single set of teeth radically eliminates any problem of precise phasing of the sets of teeth, since naturally a single set of teeth is always in step with itself. Moreover, the constructive problems are drastically simplified, since a gear with a single set of teeth is naturally much easier to obtain than a planet gear having two different sets of teeth with two different diameters.

A futher advantage is that both the movable crown gear and the fixed crown gear have the same diameter and the conditions of engagement are always kept optimal by virtue of an appropriate correction of the shaping of the teeth through the crowns have a mutually different number of teeth.

Another important aspect of the invention resides in the fact that it is possible to produce a variator with a high transmission ratio with a single stage, which is capable of replacing, for example, endless screw reducers, with the advantage of having a much higher performance than that of the latter, since there occur none of the slippages typical on endless screws, which considerably reduce their performance.

The invention thus conceived is susceptible to numerous modifications and variations, all of which are within the scope of the inventive concept.

Furthermore, all the details may be replaced by other technically equivalent elements.

In practice, the materials employed, as well as the dimensions and the contingent shapes, may be any according to the requirements.

## Claims

1. Gear speed variator of simplified construction, characterized in that it comprises a casing (12,13,14) having a solar gear (15,15') which can be coupled to a first shaft, or fast shaft (16), and is engaged with at least one planet gear (20,20') with a single set of teeth (30) simultaneoulsy engaging a fixed crown gear (31,31') associated with said casing (12,13,14) of said variator (10), and a movable crown gear (32,32'), associated with a second shaft, or slow shaft (35), and having a number of teeth which differs from the number of teeth of said fixed crown gear (31,31'), said fixed (31,31') and movable (32,32') crown gears being coaxial with respect to said solar gear (15,15').

2. Variator, according to claim 1, characterized in that said solar gear (15) is provided with a set of teeth having an axial extension which is equal or possibly greater than the axial extension of said set of teeth (30) of said at least one planet gear (20,20').

3. Variator, according to the preceding claims, characterized in that said movable crown gear (32,32') and said fixed crown gear (31,31') have primitive diameters which are substantially equal to one another.

4. Variator, according to one or more of the preceding claims, characterized in that said at least one planet gear (20) is rotatably supported by a planet carrier (22) which is coaxially rotatable about said solar gear (15).

5. Variator, according to one or more of the preceding claims, characterized in that said at least one planet gear (20') is mounted floating between said solar gear (15') and said fixed crown gear (31') and said movable crown gear (32').

Fig.1

Fig. 2

Fig. 3

32'  31'  14'  15'  20'

0 274 089

## DOCUMENTS CONSIDERED TO BE RELEVANT

| Category | Citation of document with indication. where appropriate, of relevant passages | Relevant to claim | CLASSIFICATION OF THE APPLICATION (Int. Cl 4) |
|---|---|---|---|
| X | US - A - 3 675 510 (DUGGAR) <br> * Totality * | 1-5 | F 16 H 1/36 |
| A | DE - A1 - 3 305 151 (MENKHOFF) <br> * Totality * | 1-5 | |
| A | US - A - 4 366 727 (JONSSON) | | |

| | | TECHNICAL FIELDS SEARCHED (Int. Cl 4) |
|---|---|---|
| | | F 16 H 1/00 <br> F 16 H 3/00 |

The present search report has been drawn up for all claims

| Place of search | Date of completion of the search | Examiner |
|---|---|---|
| VIENNA | 23-02-1988 | HEMMELMEIER |